# EUROPÄISCHE PATENTSCHRIFT

(11) **EP 3 492 408 B1**
(45) Veröffentlichungstag und Bekanntmachung des Hinweises auf die Patenterteilung: **12.07.2023**
(21) Anmeldenummer: 18208799.9
(22) Anmeldetag: 28.11.2018
(51) Int. Cl.: B65G 37/00, B65G 47/08, B65G 57/14, B65B 19/02, B65B 35/44, B65B 35/50, B65G 21/12, B65G 41/00

(54) **VORRICHTUNG ZUM TRANSPORT VON PACKUNGEN UND ZUM HERSTELLEN VON PACKUNGSGRUPPEN**
DEVICE FOR TRANSPORTING PACKAGES AND FOR CREATING PACKAGE GROUPS
DISPOSITIF DE TRANSPORT DE PAQUETS ET DE FABRICATION DE GROUPES DE PAQUETS

(30) Priorität: 30.11.2017 DE 102017011079
(43) Veröffentlichungstag der Anmeldung: 05.06.2019
(73) Patentinhaber: Focke & Co. (GmbH & Co. KG), 27283 Verden (DE)
(72) Erfinder: Schweers, Hans-Jürgen, 27239 Twistringen (DE)
(74) Vertreter: Aulich, Martin

(56) Entgegenhaltungen:
- EP-A2- 0 059 840
- WO-A1-2018/119495
- DE-T5-112015 003 025
- DE-U1- 8 709 053
- US-A1- 2005 074 321

## Beschreibung

Die Erfindung betrifft eine Vorrichtung zum Transport von quaderförmigen Packungen gemäß dem Oberbegriff des Anspruchs 1.

Der Transport von quaderförmigen Packungen, insbesondere von Zigarettenpackungen, kann vorzugsweise für die Herstellung von Packungsgruppen aus zwei Packungsreihen mit je fünf Packungen eingesetzt werden, also zur Schaffung des Inhalts einer Zigarettenstange.

Maßnahmen zur Bildung von Packungsgruppen durch Zusammenführen von Einzelpackungen sind bekannt. Bei der Technologie gemäß DE 41 27 612 B4 werden Packungen für Papiertaschentücher durch einen Zuförderer einzeln, aufeinanderfolgend einer Sammelstation zugeführt. Die einzelnen Packungen werden auf eine höher liegende Ebene der Einschubstellung angehoben und sodann in den Bereich von Gurtförderern durch Einschieben transportiert. Die Gurtförderer weisen winkelförmige Tragorgane für die Packungen auf. Wenn mehrere Reihen übereinander komplettiert sind, werden diese gemeinsam unter Bildung einer entsprechenden Packungsgruppe aus fünf übereinanderliegenden Reihen ausgeschoben.

Aus DE 87 09 053 U1 ist eine Vorrichtung zum Transport von quaderförmigen Packungen nach dem Oberbegriff des Anspruchs 1 bekannt, bei der die Packungen in einer vertikalen Fördereinrichtung aus zwei parallel laufenden Endlos-Bürstenbändern transportiert werden. Die parallel verlaufenden Bürstenreihen greifen dabei unter die Packungen und tragen diese.

Die Erfindung befasst sich mit der Handhabung von insbesondere Zigarettenpackungen, deren Transport und mit der Bildung von Zigarettengruppen als Inhalt einer üblichen Gebindepackung (Zigarettenstange). Im Vordergrund steht die Aufgabe, die Transportvorrichtung für die Packungen so auszubilden, dass diese während des Transports im Bereich von Gurtförderern ausreichend fixiert sind und darüber hinaus eine Anpassung der Packungsförderer an unterschiedliche Abmessungen der Packungen möglich ist.

Zur Lösung dieser Aufgabe ist die erfindungsgemäße Transportvorrichtung durch die Merkmale des Anspruchs 1 gekennzeichnet.

Die Organe zum Halten der Packungen während des Transports, also die an den Fördergurten angebrachten Halterungen, sind so ausgebildet, dass sie die Packungen an gegenüberliegenden Seiten - Unterseite und Oberseite - jeweils im Randbereich, insbesondere benachbart zu einer Stirnwand einerseits und zu einer Bodenwand andererseits, beidseitig erfassen. Die Packungen liegen jeweils auf horizontalen Tragschenkeln der Halterungen auf. Gegenüberliegend - an der Oberseite - ist ein Halteschenkel wirksam, der aufgrund seiner Gestaltung Packungen unterschiedlicher Größe, insbesondere unterschiedlicher Höhe, erfasst. Dieser Halteschenkel ist als schräggerichteter Steg des Profils der Halterung ausgebildet oder mit einer bogenförmigen Kontur.

Eine weitere (auch eigenständig einsetzbare) Maßnahme zur Anpassung der Transportvorrichtung an unterschiedliche Abmessungen der Packung ist erfindungsgemäß die Veränderbarkeit des Abstands zwischen den zusammenwirkenden Halterungen durch Anpassung des Abstands der zusammenwirkenden Fördergurte, mindestens von Fördertrumen derselben. Vorzugsweise wird durch ein entsprechendes, gegebenenfalls manuell bedienbares Getriebe der Abstand zwischen den Fördergurten verändert, und zwar durch Verschiebung eines der Fördergurte oder durch Verschiebung beider zusammenwirkenden Fördergurte.

Ein besonderes Verfahren, das auch unabhängig von der besonderen Transportvorrichtung für Packungen eingesetzt werden kann, betrifft die Zusammenstellung einer Gruppe von Zigarettenpackungen als Inhalt eines Packungsgebindes, nämlich einer Zigarettenstange, üblicherweise mit fünf oder zehn Zigarettenpackungen, die im letztgenannten Falle paarweise übereinanderliegen.

Gemäß einer bevorzugten Ausführungsform werden die jeweils fünf Packungen einer Packungsreihe durch Fördergurte mit Halterungen aufgenommen. Die Gurte werden taktweise bewegt, vorzugsweise in Abwärtsrichtung, zu einer Ausschubposition. Jeweils zwei übereinanderliegende Reihen von Packungen werden durch ein gemeinsames Abschuborgan, insbesondere durch einen Abförderer mit entsprechenden Mitnehmern, erfasst und aus den beiden übereinanderliegenden Halterungen ausgeschoben, zusammengeführt und als formierter Inhalt einer Zigarettenstange abtransportiert.

Ein weiteres, auch unabhängig von den vorstehenden Ausführungen anwendbares Thema, welches kein Teil der Erfindung darstellt, betrifft den Transport von (quaderförmigen) Packungen mittels Fördergurt und Umlenkung desselben, insbesondere zur Überwindung von der Höhe nach versetzten Transportebenen. Im Bereich der Umlenkung wird der Fördergurt durch beabstandete Umlenkorgane, insbesondere Umlenkrollen geführt, deren Abstand voneinander größer ist als die (quergerichtete) Abmessung der Packungen. Dadurch können die Packungen durch den Gurt im Bereich der Umlenkung transportiert werden, ohne dass eine Beeinträchtigung durch die Umlenkung gegeben ist.

Weitere Einzelheiten der Erfindung werden nachfolgend anhand der Zeichnungen erläutert. Es zeigt:
- Fig. 1: eine Vorrichtung zum Handhaben von (Zigaretten-)Packungen in schematischer Seitenansicht,
- Fig. 2: eine Einzelheit der Vorrichtung gemäß Fig. 1 in quergerichteter Schnittebene II-II, in vergrößertem Maßstab,

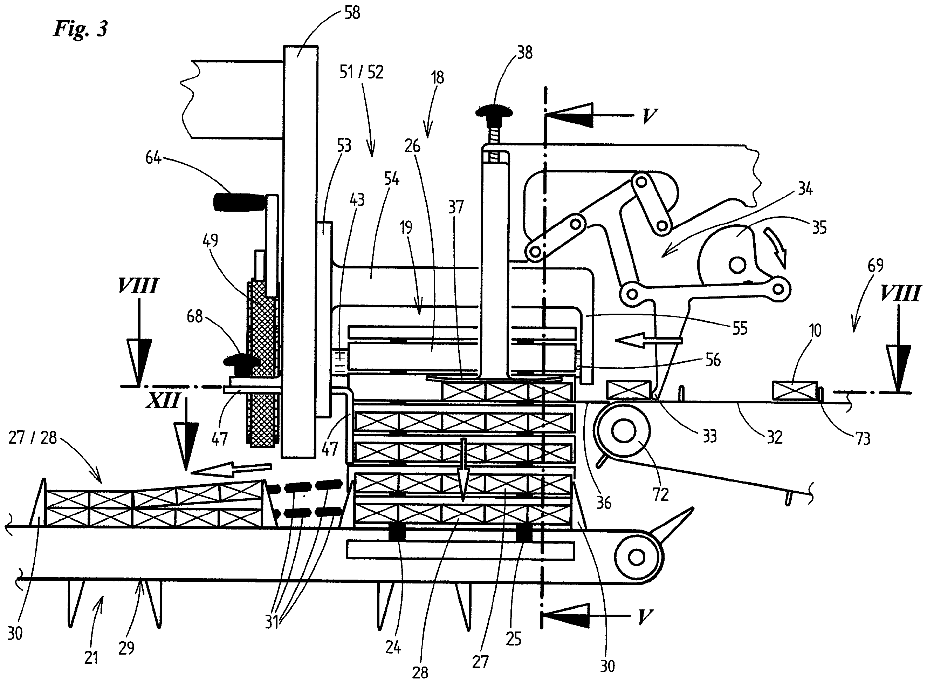

- Fig. 3: einen Querschnitt der Vorrichtung in Schnittebene III-III der Fig. 2,
- Fig. 4: eine Darstellung im Wesentlichen entsprechend Fig. 3 während einer veränderten Arbeitsphase,
- Fig. 5: einen Querschnitt der Vorrichtung im Bereich der Schnittebene V-V der Fig. 3, in vergrößertem Maßstab,
- Fig. 6: eine Fördereinheit analog Fig. 5 in Seitenansicht mit besonderer Funktion,
- Fig. 7: eine Draufsicht auf ein Stellgetriebe als Einzelheit der Vorrichtung gemäß Pfeil VII in Fig. 1,
- Fig. 8: einen Horizontalschnitt der Vorrichtung gemäß Schnittebene VIII-VIII in Fig. 3, bei vergrößertem Maßstab,
- Fig. 9: eine Einzelheit der Vorrichtung, nämlich ein Stellgetriebe, teilweise im Horizontalschnitt in Schnittebene IX-IX der Fig. 7,
- Fig. 10: eine Einzelheit eines Zuförderers für Packungen in der Schnittebene X-X der Fig. 1, in vergrößertem Maßstab,
- Fig. 11: eine Einzelheit des Zuförderers für Packungen in der Schnittebene XI-XI der Fig. 1, ebenfalls in vergrößertem Maßstab,
- Fig. 12: eine Einzelheit der Vorrichtung im Bereich eines Abförderers für Packungsgruppen, nämlich in einer Draufsicht entsprechend Pfeil XII in Fig. 3.

Thema der in den Patentzeichnungen dargestellten Erfindung gemäß Anspruch 1 ist die Handhabung von quaderförmigen Packungen 10. Vorrangig geht es um Packungen 10 für Zigaretten. Gezeigt sind Klappschachteln bestehend aus Schachtelteil 11 und Deckel 12. Die Packungen 10 sind begrenzt von einer großflächigen Vorderfläche 13, einer entsprechenden Rückfläche 14, schmalen, langgestreckten Seitenflächen 15 sowie einer Stirnfläche 16 und einer Bodenfläche 17.

Die Packungen 10, also vorzugsweise komplett fertiggestellte Zigaretten-Packungen, werden, von einer zum Beispiel Verpackungsmaschine kommend, einer Verarbeitungsstation bzw. einer Sammelstation 18 zugeführt. Innovativer Kern derselben ist ein Packungsförderer 19 mit den Merkmalen des Anspruchs 1, dem in einer Aufnahmestation 20 einzelne Packungen 10 nacheinander übergeben werden. Die Packungen 10 werden durch den Packungsförderer 19 einer Abgabestation 21 zugeführt, in deren Bereich die Packungen dem Packungsförderer 19 entnommen und einem Abförderer 29 übergeben werden.

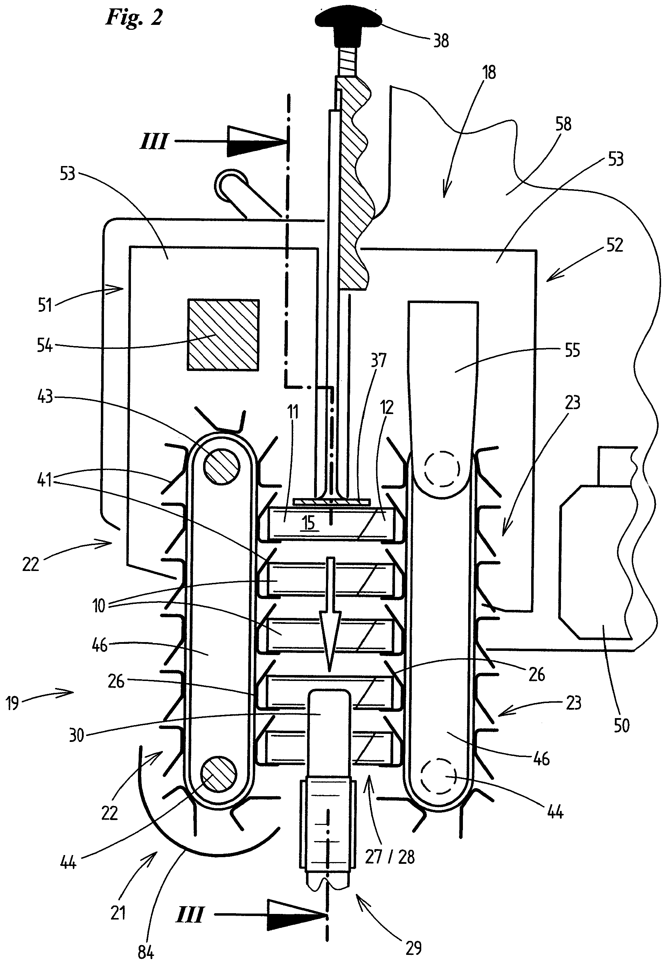

Der Packungsförderer 19 besteht aus zwei Gurtförderern 22, 23, die zusammenwirkend die Packungen 10 aufnehmen und transportieren. Jeder Gurtförderer 22, 23 besteht vorliegend aus zwei parallelen, beabstandeten Einzelgurten 24, 25, die in aufrechter Ebene den Transport der Packungen 10 durchführen, vorliegend von der höher gelegenen Aufnahmestation 20 in die tiefer liegende Abgabestation 21. Im Bereich derselben ist mindestens einem Gurtförderer 22 ein gewölbtes bzw. gerundetes Schutzgehäuse 84 zugeordnet, welches mit Abstand vom Gurtförderer 22 dieses im unteren Bereich schützend umgibt (Fig. 2).

Die Gurtförderer 22, 23 bzw. deren Einzelgurte 24, 25 weisen besondere Halterungen 26 für die Packungen 10 auf. Die Halterungen 26 sind mit Abstand bzw. bevorzugt mit jeweils gleichem Nennabstand zueinander an den Einzelgurten 24, 25 angebracht. Vorliegend sind die Halterungen 26 so ausgebildet, dass sie jeweils eine Anzahl von nebeneinanderliegenden Packungen 10 aufnehmen. Eine besondere Ausführungsform besteht darin, dass die Sammelstation 18 zur Bildung von Packungsgruppen aus vorzugsweise zwei Packungsreihen 27, 28 mit jeweils fünf nebeneinanderliegenden Packungen 10 geeignet ist. Die Formation der Packungsreihen 27, 28 entspricht dem Inhalt einer üblichen Gebindepackung für Zigaretten, einer sogenannten Stange. Die paarweise einander gegenüberliegenden Halterungen 26 sind als einstückige, durchgehende Profile ausgebildet, die die einander zugeordneten Einzelgurte 24, 25 miteinander verbinden.

Die Halterungen 26 sind so angeordnet, dass einander gegenüberliegende Halterungen 26 jeweils mindestens eine Packung 10 erfassen. Erfindungsgemäß sind die Halterungen 26 als langgestreckte profilartige Organe ausgebildet, wobei in dem vorliegenden Ausführungsbeispiel die Halterungen 26 hinsichtlich der Abmessung für die Aufnahme von mehreren (fünf) nebeneinanderliegenden Packungen 10 vorgesehen sind. Diese Gruppe bzw. Packungsreihe 27, 28 wird (taktweise) durch den Packungsförderer 19 transportiert. Wenn demnach eine Packungsreihe 27 in einer Transportposition zwischen Halterungen 26 komplettiert ist, werden die Gutförderer 22, 23 um einen Takt weitergeschaltet, sodass eine nachfolgende Einheit aus zwei zusammenwirkenden Halterungen 26 in die Aufnahmeposition (Aufnahmestation 20) gelangt.

Im Bereich der unteren Abgabestation 21 wird diese Formation aus zwei Packungsreihen 27, 28 dadurch gebildet, dass gleichzeitig zwei Transporteinheiten aus einander gegenüberliegenden Halterungen 26 der Gutförderer 22, 23 entleert werden, und zwar durch Ausschieben der Packungen 10 aus den Halterungen 26 in Längsrichtung derselben. Die beiden übereinanderliegenden Paare der Halterungen 26 werden in der unteren Stellung der Gurtförderer 22, 23 gemeinsam ausgeschoben während einer Stillstandsphase des Packungsförderers 19, nämlich insbesondere während der Beschickung von Halterungen 26 im Bereich der Aufnahmestation 20.

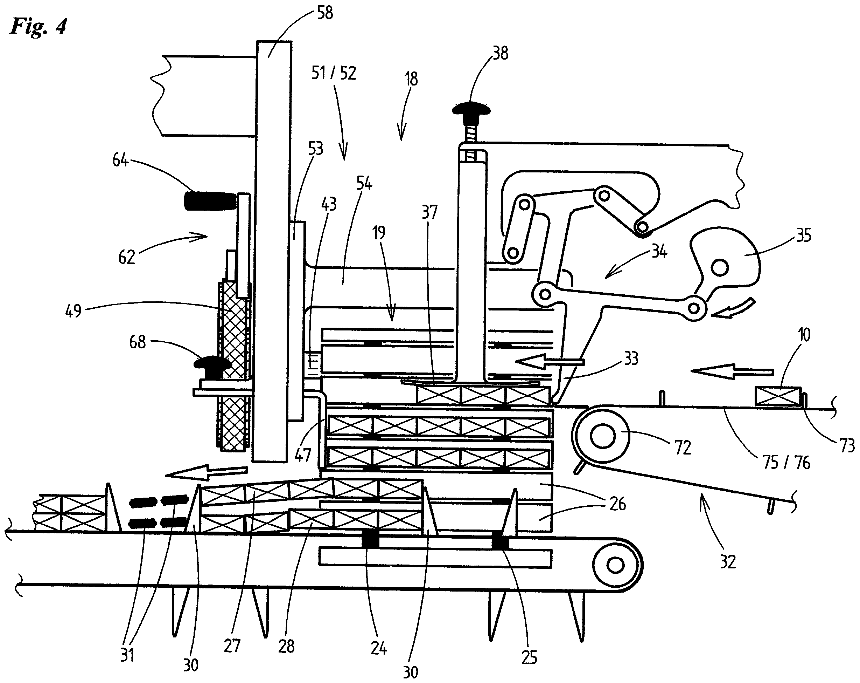

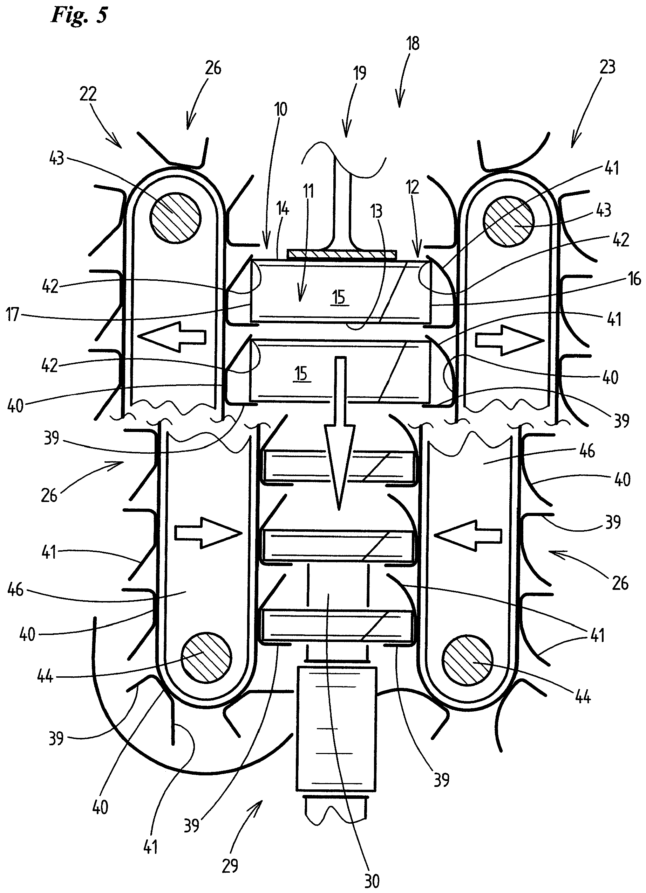

Für den Vorgang des Abschiebens der Packungen 10 wird ein besonderer endloser Abförderer 29 eingesetzt, der zwischen den Gutförderern 22, 23 und zwischen den Halterungen 26 positioniert ist (Fig. 5). Der Abförderer 29 ist mit einem Gurt mit quergerichteten Mitnehmern 30 ausgerüstet, die hinsichtlich der Länge bzw. Höhe so bemessen sind, dass zwei Packungsreihen 27, 28 in der unteren Position des Packungsförderers 19 erfasst und gleichzeitig ohne Veränderung der Relativstellung der Packungen 10 aus den Halterungen 26 ausgeschoben werden (Fig. 4). Die Packungsreihen 27, 28, werden auf dem Abförderer 29 abgelegt.

Die (taktweise) Transportbewegung des Abförderers 29 ist auf den Packungsförderer 19 so abgestimmt, dass dieser zwei Fördertakte ausführt, bevor der Abförderer 29 zwei bereitgestellte Packungsreihen 27, 28 mit einem entsprechenden Transporttakt abfördert. Die Bewegungen des Packungsförderers 19 und des Abförderers 29 sind aufeinander abgestimmt. Zwischen der Aufnahmestation 20 und der Abgabestation 21 befinden sich mehrere Zwischenstationen der Packungsreihen 27, 28 während der Abwärtsbewegung, insbesondere zwei Zwischenstellungen der einander zugeordneten Halterungen 26.

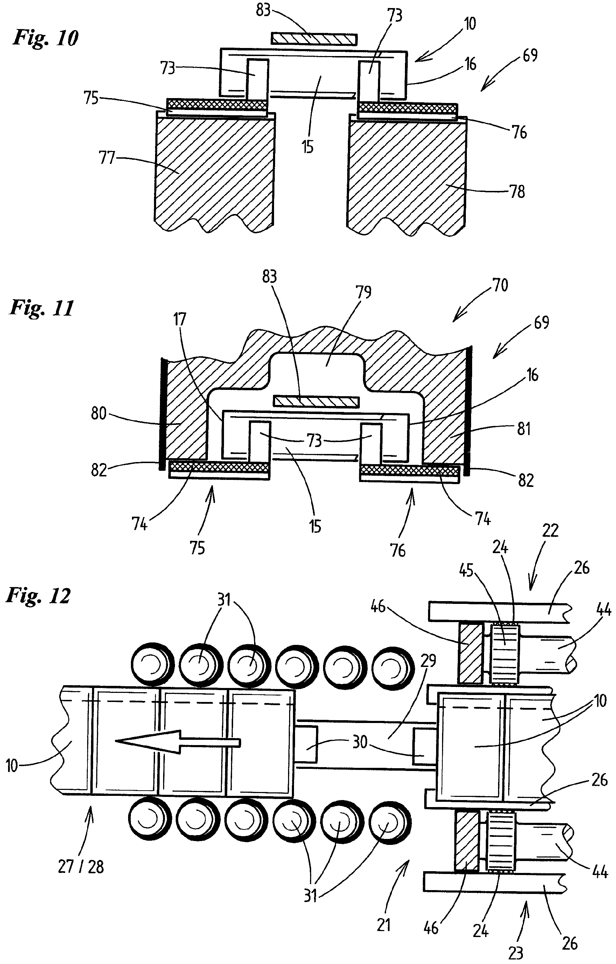

Die Übergabe der Packungen 10 bzw. der Packungsreihen 27, 28 von dem Packungsförderer 19 an den Abförderer 29 wird durch Führungsorgane oberhalb der Bewegungsbahn des Abförderers 29 gesichert. Es handelt sich dabei vorliegend um mehrere Führungsrollen 31, die vorzugsweise zu beiden Seiten der Bewegungsbahn der Packungen 10 beim Ausschub angeordnet sind, und zwar unmittelbar im Anschluss an die zugeordneten Halterungen 26. Die der Bewegungsbahn der Packungen 10 folgenden, also insbesondere schräg abfallend positionierten Führungsrollen 31 sind um vertikale bzw. aufrechte Achsen drehbar und liegen vorzugsweise an den benachbarten Flächen der Packungen 10 an. Die Führungsrollen 31 sind drehbar, aber vorzugsweise nicht angetrieben (Fig. 12).

Die vorzugsweise einzeln von einem Zulaufgurt 32 mit Mitnehmern transportierten Packungen 10 werden im Bereich der Aufnahmestation 20 von dem Zulaufgurt 32 ab- und in die durch die gegenüberliegenden Halterungen 26 gebildete Aufnahme des Packungsförderers 19 eingeschoben. Zu diesem Zweck ist ein Einschieber 33 vorgesehen. Dieser wird mit Hilfe eines Hebelgetriebes 34, welches von einer Kurbel 35 bewegt wird, so betätigt, dass ein linearer Einschubtakt für die Packungen 10 erzeugt wird, danach der Einschieber 33 von dem Zulaufgurt 32 abgehoben und oberhalb der Bewegungsbahn der Packungen 10 in eine Ausgangsstellung zurückbewegt wird, in der durch entsprechende Absenkbewegung die nächste Packung 10 durch den Einschieber 33 erfasst wird. Zwischen Zulaufgurt 32 und dem Eintrittsende der Halterungen 26 befindet sich eine Brücke 36 als Übergang.

Die Packungen 10 werden vorliegend in Querrichtung, also bei quergerichteter Längserstreckung, in die Halterungen 26 eingeschoben, wobei durch den Einschubvorgang die Packungen 10 in den Halterungen 26 jeweils um einen packungsgemäßen Abschnitt weitergefordert werden, bis die Packungsreihe 27, 28 komplettiert ist. Innerhalb der Packungsreihe 27, 28 liegen die Packungen 10 mit den schmalen Seitenflächen 15 aneinander.

Die exakte Positionierung der Packungen 10 bzw. der Packungsreihen 27, 28 im Bereich des Packungsförderers 19 wird durch Führungsorgane gewährleistet. An der Oberseite der Packungen 10 befindet sich im Bereich der Aufnahmestation 20 zwischen den Gurtförderern 22, 23 eine Höhenführung 37. Diese ist plattenförmig ausgebildet und kann Kontakt mit der Oberseite der Packungen 10 haben, vorliegend an der nach oben gerichteten Rückfläche 14. Die Höhenführung 37 ist verstellbar mittels Klemmschraube 38 zur Anpassung an Packungen unterschiedlicher (Höhen-)Abmessung. Die Höhenführung 37 erstreckt sich bis zur Eintrittsseite der Packungen in den Bereich der Halterungen 26, sodass ein exakter Eintritt der Packungen 10 in die Halterungen 26 gewährleistet ist.

Ein weiteres Mittel zum Ausrichten der Packungen 10 im Bereich des Packungsförderers 19 ist ein Anschlag 47 auf der zur Einschubseite gegenüberliegenden Seite der Halterungen 26. Dieser ist im Wesentlichen als aufrechter Steg ausgebildet und an den freien, offenen Enden der Halterungen 26 positioniert, sodass die jeweils zuerst eingeführte Packung 10 mit einer Endfläche (Seitenfläche 15) Anlage an dem Anschlag 47 erhält. Dieser ist so bemessen, dass die Führung sich über mehrere Bewegungsschritte des Packungsförderers 19 erstreckt, jedoch oberhalb der Ausschubstellung für die (zwei) Packungsreihen 27, 28 endet. Der Anschlag 47 ist zur Anpassung an unterschiedliche Abmessungen der Packungen 10 verstellbar und mittels Klemmschraube 68 fixierbar.

Eine Besonderheit ist die Ausbildung der Halterungen 26 für einzelne Packungen 10 oder für Packungsreihen 27, 28. Erfindungsgemäß sind die Halterungen 26 als langgestreckte Profile ausgebildet, die durch Formung von Metallblech oder im Stranggießverfahren (aus Kunststoff) hergestellt sind. Die Halterungen 26 umfassen einen Tragschenkel 39, der horizontal gerichtet ist und zur Auflage von randseitigen Bereichen der Packung 10 dient. Vorliegend ist ein der Stirnseite 16 zugekehrter Bereich der Packung einerseits und ein der Bodenseite 17 zugekehrter Bereich andererseits auf dem Tragschenkel 39 positioniert. Insofern die Abstände bzw. Nennabstände der Halterungen 26 jedes Einzelgurts 24, 25 jeweils gleich sind, vgl. oben, so beziehen sich diese auf die Abstände zwischen den horizontalen Tragschenkeln 39.

Ein Verbindungsschenkel 40 erstreckt sich quer zum Tragschenkel 39, nämlich vorliegend in aufrechter Ebene. Der Verbindungsschenkel 40 dient zum Anbringen des Profils der Halterung 26 an dem Einzelgurt 24, 25. Zugleich kann der Verbindungsschenkel 40 Anlagewandung für Stirnfläche 16 und Bodenfläche 17 der Packung 10 sein (Fig. 5, unten).

Die Besonderheit der vorliegenden Halterungen 26 liegt darin, dass auch im Bereich der Oberseite der Packungen 10 eine Abstützung bzw. Fixierung durch die Halterungen 26 erfolgt, sodass Relativbewegungen der Packungen 10 im Bereich der Halterung 26, insbesondere aufgrund der Antriebsbewegungen, ausgeschlossen sind. Die Halterung 26 ist deshalb mit einem besonders ausgebildeten Halteschenkel 41 versehen. Dieser schließt einstückig an den Verbindungsschenkel 40 an und ist in einer Schrägstellung angeordnet, also unter einem Winkel zum Gurt 22, 23. Die Form des Halteschenkels 41 ist so gewählt, dass an der Oberseite der Packung 10 - Rückfläche 14 - mindestens eine linienförmige Abstützung an der Halterung 26 gegeben ist, vorliegend aufgrund von Packungskanten 42, die zwischen der Oberseite bzw. Rückfläche 14 einerseits und der Stirnfläche 16 oder Bodenfläche 17 andererseits gebildet sind. Aufgrund der Ausbildung des Halteschenkels 41 (Schrägstellung) ist darüber hinaus eine selbsttätige Anpassung des Stütz- bzw. Halteeffekts an unterschiedliche Abmessungen (Höhe) der Packung 10 gewährleistet (Fig. 5, oben). Die Position der Abstützung der Packung 10 am Halteschenkel 41 ergibt sich selbsttätig beim Einschub der Packungen 10 in den Bereich der zusammenwirkenden Halterungen 26.

Fig. 5 zeigt die Wirkung der Halterungen 26 bei unterschiedlichen Packungsformaten. Im oberen Teilbereich sind Packungen 10 - Klappschachteln - mit einer größeren Abmessung in der Höhe (und in der Länge). Im unteren Teil sind Packungen 10 einer denkbaren kleineren Abmessung in den Halterungen 26 gezeigt. Wie im oberen Teilbereich von Fig. 5 erkennbar, kommt die Wirkung der besonderen Halteschenkel 41 besonders bei Packungen mit größerer Abmessung in der Höhe bzw. Tiefe zur Wirkung.

Weiterhin ist in Fig. 5 im Bereich des rechts angeordneten Gurtförderers 23 eine abweichende Kontur der Halterungen 26 als mögliche Alternative dargestellt, nämlich mit einem bogen- bzw. teilkreisförmigen Halteschenkel 41. Diese Form der Halteschenkel 41 ist gleichwirkend mit der schräg gerichteten Ausführung, insbesondere hinsichtlich der Anlage des Halteschenkels 41 an der Packungskante 42.

Eine weitere (auch eigenständig einsetzbare) Besonderheit besteht darin, dass der Packungsförderer 19 aufgrund Verstellung der Gurtförderer 22, 23 an unterschiedliche Abmessungen der Packungen 10 anpassbar ist, und zwar hinsichtlich der Längserstreckung und/oder der Höhe. In Fig. 5 ist im oberen Teilbereich die Position der Gurtförderer 22, 23 für den Fall von Packungen 10 mit größerer Länge und Höhe im Verhältnis zu den Packungen 10 im unteren Teilbereich gezeigt. Die Fördertrume der Gurtförderer 22, 23 sind hinsichtlich des Anstands voneinander veränderbar unter Anpassung an die Abmessung der Packungen 10, insbesondere durch Veränderung des Abstands der Gurtförderer 22, 23 insgesamt voneinander.

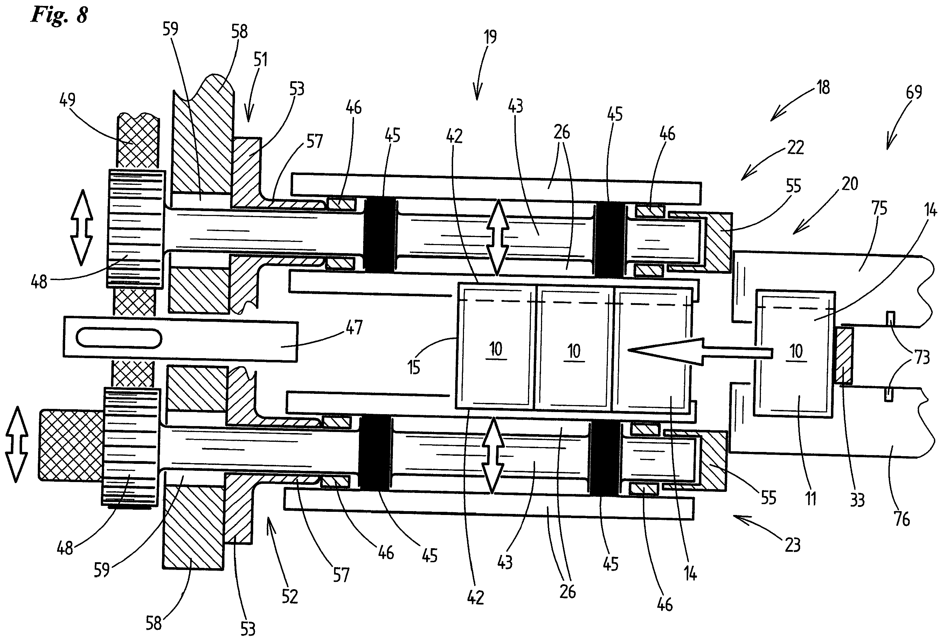

Weitere Einzelheiten einer vorteilhaften Ausführung des Packungsförderers 19 ergeben sich aus Fig. 8. Die im Abstand voneinander angeordneten Einzelgurte 24, 25 werden an einem (oberen) Umlenkende um Achsen bzw. Antriebswellen 43 jedes Gurtförderers 22, 23 gelenkt. Auf der durchgehenden Antriebswelle 43 sind zu diesem Zweck Umlenkrollen 45 angeordnet, als Teil dieser Wellen 43. An der gegenüberliegenden (unteren) Umlenkung werden die Einzelgurte 24, 25 um Achsen, nämlich Umlenkachsen 44, geführt. Die Umlenkorgane, also die Antriebswellen 43 einerseits und die Umlenkachsen 44 andererseits sind als konstruktive Einheit miteinander verbunden, vorliegend durch aufrechte Verbindungsstege 46. Diese umfassen die oberen und unteren Umlenkorgane, vorliegend Antriebswelle 43 und Umlenkachse 44, unter Bildung von Lageröffnungen, sodass die Wellen bzw. Achsen drehbar von den Verbindungsorganen bzw. Verbindungsstegen 46 gehalten sind. Jeder Gurtförderer 22, 23 ist durch die Verbindungsstege 46 (oder durch andere, gleich wirkende Verbindungsorgane) als konstruktive Einheit ausgebildet und so verschiebbar bzw. verschwenkbar.

Der Antrieb für die Gurtförderer 22, 23 bzw. für deren Einzelgurte 24, 25 wird auf die Antriebswellen 43 an einem freien Ende derselben übertragen. Vorliegend sind an den Enden Zahnräder 48 angebracht, die mittels Zahnriemen 49 durch einen Antriebsmotor 50 angetrieben werden. Der Antrieb für die Antriebswellen 43 ist vorzugsweise so ausgebildet, dass der Zahnriemen 49 über ein Antriebsrad 66 von dem Antriebsmotor 50, insbesondere einem Servomotor, angetrieben wird. Der Zahnriemen 49 läuft mit größerer Umschlingung um die Zahnräder 48 der Antriebswellen 43. Eine gesonderte Spannrolle 67 bewirkt eine konstante Spannung im Zahnriemen 49 bei unterschiedlichen Stellungen der Zahnräder 48.

Ein vorzugsweise manuell betätigbares Stellgetriebe 62 ermöglicht die Querverschiebung mindestens eines Gurtförderers 22, 23. Vorliegend ist das Stellgetriebe 62 so ausgebildet, dass beide Gurtförderer 22, 23 - vorzugsweise im Bereich der Antriebswellen 43 - querverschiebbar sind, um den Abstand voneinander zu verändern. Vorzugsweise sind die Gurtförderer 22, 23 gemeinsam (gegenläufig) in Querrichtung verstellbar, derart, dass der Achsabstand der Antriebswellen 43 und der Umlenkachsen 44 vergrößert oder verkleinert wird. Die Gurtförderer 22, 23 sind zu diesem Zweck an einem (gemeinsamen) Tragwerk gelagert, insbesondere an jedem Gurtförderer 22, 23 zugeordneten rahmenartigen bzw. U-förmigen Gurtträgern 51, 52. Jeder Gurtträger 51, 52 besteht aus einem (verstellbaren, vorzugsweise plattenförmigen) Tragstück 53, einem quer zu diesem gerichteten, vorzugsweise oberhalb jedes Gurtförderers 22, 23 positionierten Tragarm 54 und einem an dessen freiem Ende angeordneten (abwärtsgerichteten) Tragschenkel 55. Am Tragschenkel 55 befindet sich ein (End-)Lager 56 für die Achse bzw. Antriebswelle 43.

Im gegenüberliegenden, antriebsseitigen Bereich der Antriebswellen 43 bilden die Gurtträger 51, 52 eine Führungs- bzw. Lagerhülse 57 für die Antriebswellen 43. Die Gurtträger 51, 52 liegen verschiebbar an einem Teil eines Maschinengestells, vorliegend an einer Tragplatte 58. Diese ist feststehend mit dem Maschinengestell verbunden. Die Antriebswellen 43 treten durch Ausnehmungen bzw. durch Langlöcher 59 in der Tragplatte 58 hindurch. Die Antriebsorgane - Zahnräder 48 und Zahnriemen 49 - liegen auf der freien Seite der Tragplatte 58.

Zur Durchführung einer Verstellung der Gurtförderer 22, 23 hinsichtlich des Abstands werden die Antriebswellen 43 queraxial verschoben innerhalb der Langlöcher 59. Dadurch verändert sich der Abstand der Gurtförderer 22, 23 voneinander aufgrund einer entsprechenden Parallelverschiebung. Die Gurtträger 51, 52 bzw. die Tragstücke 53 als konstruktiver Teil der Gurtträger 51, 52 werden zu diesem Zweck entsprechend relativ zur Tragplatte 58 verschoben. Die Bewegungen werden mit Hilfe eines vorzugsweise manuell bedienbaren Stellgetriebes 62 ausgeführt.

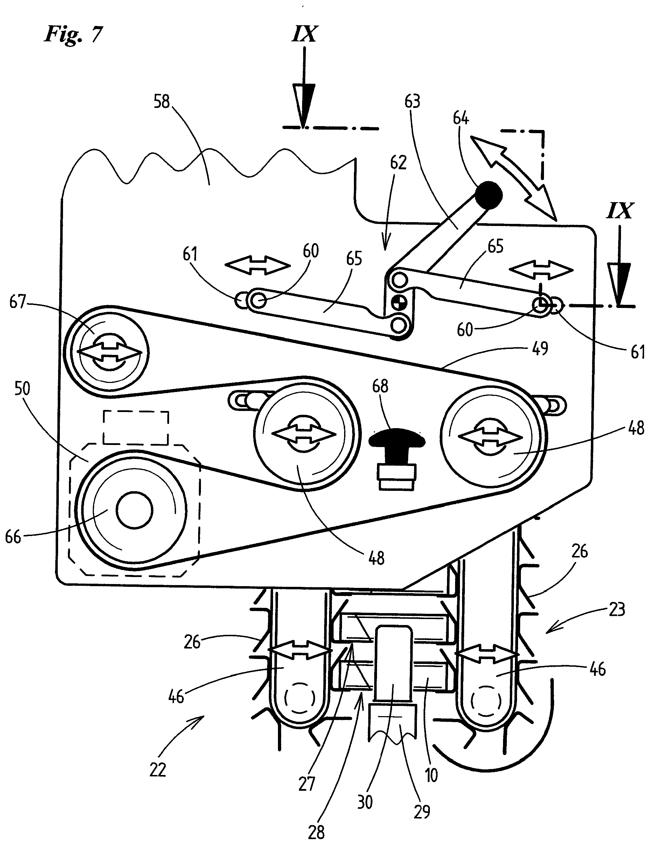

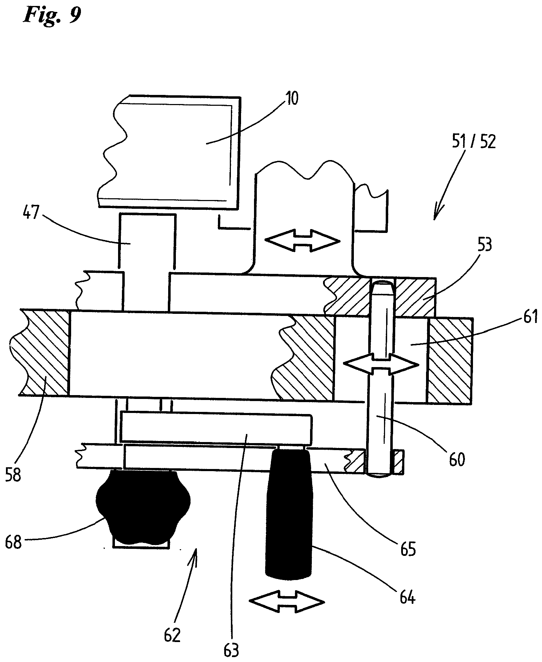

Das Stellgetriebe 62 für die Gurtförderer 22, 23 ist als Ausführungsbeispiel in Fig. 7 und in Fig. 9 gezeigt. Ein Stellorgan, vorliegend eine Betätigungsstange 60, ist mit den Gurtförderern 22, 23 verbunden, insbesondere mit den Gurtträgern 51, 52, vorliegend mit den an der Tragplatte 58 anliegenden Tragstück 53 (Fig. 9). Durch Betätigen der Stange 60 in Querrichtung wird entsprechend eine Verschiebung der Gurtträger 51, 52 bewirkt.

Die Betätigungsstange 60 ist jeweils durch eine Öffnung 61 in der Tragplatte 58 hindurchgeführt und auf der zu den Gurtförderern 22, 23 gegenüberliegenden Seite mit dem Stellgetriebe 62 bzw. Stellorganen verbunden. Gemäß Ausführungsbeispiel in Fig. 7 ist ein ortsfest gelagerter, schwenkbarer Betätigungshebel 63 - vorliegend mit Handgriff 64 - mit den Betätigungsorganen, nämlich den Stangen 60 über zugeordnete Schwenkhebel 65 in der Weise verbunden, dass in der einen Bewegungsrichtung des Betätigungshebels 63 die Abstände der Einzelgurte 24, 25 voneinander vergrößert und in der anderen Richtung entsprechend verringert werden.

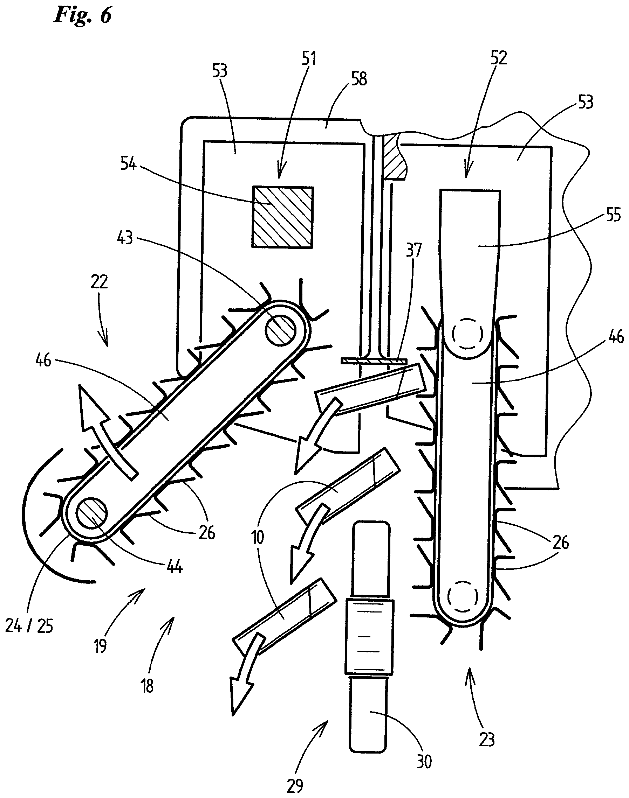

Eine weitere Besonderheit hinsichtlich der Handhabung des Packungsförderers 19, nämlich der Gurtförderer 22, 23, ist die technische Möglichkeit, durch entsprechenden Eingriff alle sich im Bereich der Gurtförderer 22, 23 befindenden Packungen auszusondern (Fig. 6). Die Gurtförderer 22, 23 sind zu diesem Zweck im Bereich der oberen Umlenkung - Antriebswelle 43 - schwenkbar gelagert, sodass durch relative Drehbewegung der Tragschenkel 55 mindestens ein Gurtförderer 22 in eine Schrägstellung schwenkbar ist (Fig. 6). Diese Stellung ermöglicht die Entnahme aller Packungen 10, die sich bereits im Packungsförderer 19 bzw. in den Halterungen 26 befinden. Die Schwenkbewegung wird dadurch bewirkt, dass die Trageinheiten der Gurtförderer 22, 23, also vorliegend die Verbindungsstege 46 des betreffenden Gurtförderers, um die obere Umlenkachse, also um die Antriebswelle 43, verschwenkt werden.

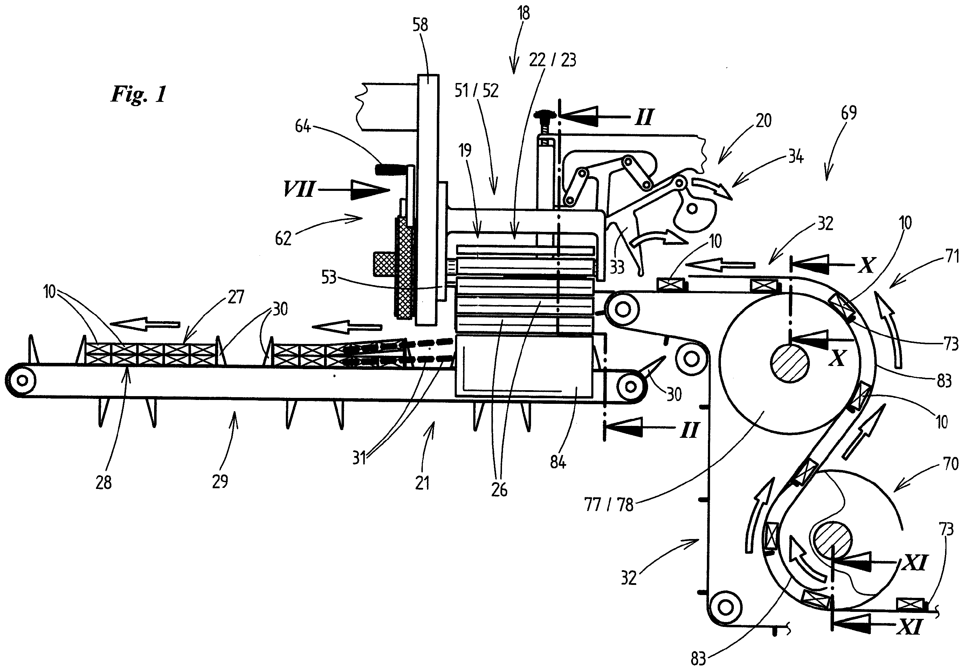

Die Abbildung 1 zeigt ein Transportaggregat 69, welches dem Packungsförderer 19 vorgeordnet ist und vorliegend den Transport der Packungen 10 von einem Packer kommend bis zur Übergabe an den Packungsförderer 19 durchführt. Die Besonderheit des Transportaggregats 69 liegt darin, dass ein Förderer für die Packungen 10 - vorliegend der Zulaufgurt 32 - gegenläufige Umlenkungen ermöglicht, also insbesondere auch Umlenkungen des Zulaufgurts 32, bei denen die Packungen 10 an der Innenseite der Umlenkung liegen. Bei dem gezeigten Ausführungsbeispiel wird der Zulaufgurt 32 aus einer unteren Zuführungsebene über zwei gegenläufige Umlenkungen in die Ebene der Aufnahmestation 20 geführt.

Das beispielhaft in Fig. 1 gezeigte Transportaggregat 69, welches kein Teil der Erfindung darstellt, enthält eine erste, untere Umlenkwalze 70 und eine zweite Umlenkwalze 71. Die Umlenkwalzen 70, 71 sind der Höhe nach versetzt zueinander angeordnet. Die (obere) Umlenkwalze 71 ist so angeordnet, dass ein die Umlenkwalze 71 verlassender Abschnitt des Zulaufgurts 32 horizontal verläuft und in der Ebene der Aufnahmestation 20. Am Ende der wirksamen (horizontalen) Förderstrecke befindet sich eine Umlenkrolle 72, die den Zulaufgurt 32 nach unten ablenkt.

Der Zulaufgurt 32 weist Mitnehmer 73 auf, die jeweils eine Packung an der Rückseite erfassen. Die Besonderheit liegt darin, dass die Mitnehmer 73 sich nur in einem Teilbereich des Gurts erstrecken, und zwar außerhalb des Wirkungsbereichs von Umlenkorganen, also der Umlenkwalze 70, 71. Weiterhin sind die Umlenkwalzen 70, 71 so ausgebildet bzw. konturiert, dass die Packungen 10 im Bereich der Umlenkwalze 70 (Fig. 11) der Achse bzw. Mantelfläche der Umlenkwalze 70 zugekehrt sind, jedoch keinen Kontakt mit dieser haben (Fig. 11). Der Gurt 32 liegt mit seitlichen Bereichen, nämlich mit seitlichen Stützstreifen bzw. Anlagestreifen 74 - außerhalb des Bereichs der Packungen 10 und der Mitnehmer 73 -, an den Umlenkorganen bzw. an der Umlenkwalze 70 an.

Bei dem gezeigten Ausführungsbeispiel besteht der Zulaufgurt 32 aus (zwei) Teilgurten 75, 76, die vorzugsweise als Zahnriemen ausgebildet sind. Die Teilgurte 75, 76 sind je in einander benachbarten Bereichen mit einem Mitnehmer 73 versehen, sodass die Packungen 10 jeweils durch zwei in Abstand voneinander liegende Mitnehmer 73 erfasst werden.

Die der Aufnahmestation 20 zugekehrte Umlenkwalze 71 besteht aus zwei Einzelwalzen, die in einem axialen Abstand voneinander angeordnet sind. Die Teilgurte 75, 76 liegen vorzugsweise vollflächig am Umfang dieser Einzelwalzen 77, 78 an. Der Einschieber 33 zur Übergabe der Packungen 10 an den Packungsförderer 19 tritt vorzugsweise mit einem Teilbereich in die Lücke zwischen den Teilgurten 75, 76 ein (Fig. 8).

Die (untere) Umlenkwalze 70 ist vorliegend einstückig ausgebildet und mit einer ringsherumlaufenden Vertiefung 79 versehen. In diese treten die Packungen 10 im Bereich der Umlenkung ein, ebenso Teile des Zulaufgurts 32 bzw. der Teilgurte 75, 76 mit den Mitnehmern 73. Die Vertiefung 79 ist so ausgebildet, dass die Packungen 10 - auch in quergerichteter Relativstellung - vollständig Aufnahme finden. Seitlich bildet die Umlenkwalze 70 kreisförmige Walzenstege 80, 81. An diesen liegen die Gurte bzw. Teilgurte 75, 76 mit dem seitlichen Anlagestreifen 74 an. Dieser Bereich ist glattflächig ausgebildet, weil die Verzahnung in diesem Bereich außen liegt. Vorzugsweise ist die Umlenkwalze 70 mit seitlichen Bordscheiben 82 versehen, die aufgrund der Abmessungen als seitliche Führung für die Teilgurte 75, 76 dienen.

Weiterhin ist eine Außenführung 83 für die Packungen 10 vorgesehen, ein streifenförmiges Stützelement, welches der Bewegungsbahn der Packungen 10 folgt und jeweils an der freien Außenseite derselben liegt. Die Außenführung 83 erstreckt sich vom Einlaufbereich der (ersten) Umlenkwalze 70 bis in den Abschubbereich der Packungen 10 zur Übergabe an den Packungsförderer 19.

### Bezugszeichenliste:

| | | | |
|---|---|---|---|
| 10 | Packung | 48 | Zahnrad |
| 11 | Schachtelteil | 49 | Zahnriemen |
| 12 | Deckel | 50 | Antriebsmotor |
| 13 | Vorderfläche | 51 | Gurtträger |
| 14 | Rückfläche | 52 | Gurtträger |
| 15 | Seitenfläche | 53 | Tragstück |
| 16 | Stirnfläche | 54 | Tragarm |
| 17 | Bodenfläche | 55 | Tragschenkel |
| 18 | Sammelstation | 56 | (End-)Lager |
| 19 | Packungsförderer | 57 | Lagerhülse |
| 20 | Aufnahmestation | 58 | Tragplatte |
| 21 | Abgabestation | 59 | Langloch |
| 22 | Gurtförderer | 60 | Betätigungsstange |
| 23 | Gurtförderer | 61 | Öffnung |
| 24 | Einzelgurt | 62 | Stellgetriebe |
| 25 | Einzelgurt | 63 | Betätigungshebel |
| 26 | Halterung | 64 | Handgriff |
| 27 | Packungsreihe | 65 | Schwenkhebel |
| 28 | Packungsreihe | 66 | Antriebsrad |
| 29 | Abförderer | 67 | Spannrolle |
| 30 | Mitnehmer | 68 | Klemmschraube |
| 31 | Führungsrolle | 69 | Transportaggregat |
| 32 | Zulaufgurt | 70 | Umlenkwalze |
| 33 | Einschieber | 71 | Umlenkwalze |
| 34 | Hebelgetriebe | 72 | Umlenkrolle |
| 35 | Kurbel | 73 | Mitnehmer |
| 36 | Brücke | 74 | Anlagestreifen |
| 37 | Höhenführung | 75 | Teilgurt |
| 38 | Klemmschraube | 76 | Teilgurt |
| 39 | Tragschenkel | 77 | Einzelwalze |
| 40 | Verbindungsschenkel | 78 | Einzelwalze |
| 41 | Halteschenkel | 79 | Vertiefung |
| 42 | Packungskante | 80 | Walzensteg |
| 43 | Antriebswelle | 81 | Walzensteg |
| 44 | Umlenkachse | 82 | Bordscheibe |
| 45 | Umlenkrollen | 83 | Außenführung |
| 46 | Verbindungssteg | 84 | Schutzgehäuse |
| 47 | Anschlag | | |

## Patentansprüche

1. Vorrichtung zum Transport von quaderförmigen Packungen (10) mit Hilfe von Gurtförderern (22, 23), die in aufrechter Stellung angeordnet und mit Fördertrumen einander zugekehrt sind, wobei die Gurtförderer (22, 23) einander gegenüberliegende Halterungen (26) zum Erfassen jeweils einer oder mehrerer Packungen (10) aufweisen, derart, dass mindestens zwei der zusammenwirkenden Halterungen (26) eine oder mehrere Packungen (10) für den Transport erfassen, wobei die Halterungen (26) Schenkel zum Erfassen der Packungen (10) an gegenüberliegenden Bereichen aufweisen, nämlich einen unteren, horizontalgerichteten Tragschenkel (39) zur Auflage der Packungen (10) und mindestens einen an der gegenüberliegenden oberen Seite der Packungen (10) wirkenden Gegenhalter bzw. Halteschenkel (41), der aufgrund von Formgebung, Relativstellung und/oder Bewegbarkeit an unterschiedliche Abmessungen der Packungen (10), insbesondere an unterschiedliche Höhen derselben, anpassbar ist, wobei der an der Oberseite der Packungen (10) wirksame Halteschenkel (41) der Halterung (26) mindestens in Teilbereichen unter einem Winkel zum horizontalgerichteten Tragschenkel (39) angeordnet ist, nämlich in einer Schrägstellung oder mit bogenförmiger Kontur, derart, dass die Packungen (10) bei entsprechend unterschiedlichen Relativstellungen aufgrund unterschiedlicher Abmessungen an entsprechenden Bereichen des schräggerichteten oder bogenförmigen Halteschenkels (41) anliegen, vorzugsweise an einer den Halteschenkeln (41) zugekehrten, quergerichteten Packungskante (42), **dadurch gekennzeichnet, dass** mindestens eine der einer Packung (10) zugeordneten Halterungen (26) als geformtes, langgestrecktes, im Querschnitt etwa C-förmiges, beidendig offenes Profil ausgebildet ist mit dem horizontalen Tragschenkel (39), einem 2021099546.DOCX hieran anschließenden aufrechten Verbindungsschenkel (40) und dem an diesen anschließenden Halteschenkel (41).

2. Vorrichtung nach Anspruch 1, **dadurch gekennzeichnet, dass** quaderförmige Packungen (10) mit Vorderfläche (13), Rückfläche (14), Seitenflächen (15), Stirnfläche (16) und Bodenfläche (17) derart im Bereich der zusammenwirkenden, benachbarten Halterungen (26) Aufnahme finden, dass die langgestreckten Seitenflächen (15) quer zu den Halterungen (26) ausgerichtet sind und die Packungen (10) mit einem der Stirnfläche (16) einerseits und der Bodenfläche (17) andererseits zugekehrten Bereich Aufnahme in den Halterungen (26) finden, wobei vorzugsweise eine (obere) zwischen einer großflächigen Packungsseite einerseits und der Stirnfläche (16) oder der Bodenfläche (17) anderseits gebildete Packungskante (42) Anlage an dem Halteschenkel (41) der Halterung (26) erhält.

3. Vorrichtung nach Anspruch 1 oder 2, **dadurch gekennzeichnet, dass** das mindestens eine Profil zur Aufnahme einer Mehrzahl - vorzugsweise von fünf - nebeneinanderliegenden Packungen (10) zur Bildung einer Packungsreihe (27, 28) für eine Zigaretten-Gebindepackung mit vorzugsweise fünf oder zehn Packungen (10) ausgebildet ist.

4. Vorrichtung nach Anspruch 1 oder einem der weiteren vorhergehenden Ansprüche, **dadurch gekennzeichnet, dass** die Gurtförderer (22, 23) hinsichtlich des Abstands voneinander verstellbar sind, insbesondere derart, dass die aufrechten Gurtförderer (22, 23) hinsichtlich des Abstands voneinander parallel verschiebbar sind zur Anpassung an unterschiedliche Abmessungen der zu transportierenden Packungen (10).

5. Vorrichtung nach Anspruch 1 oder einem der weiteren vorhergehenden Ansprüche, **gekennzeichnet durch** folgende Merkmale:
a) vorzugsweise beide Gurtförderer (22, 23) bestehen aus mehreren, insbesondere zwei mit Abstand voneinander laufenden Einzelgurten (24, 25),
b) die Einzelgurte (24, 25) sind durch die die Halterungen (26) bildenden Profile miteinander verbunden,
c) die Gurtförderer (22, 23) weisen obere und untere Umlenkachsen für die Einzelgurte (24, 25) auf, insbesondere eine Antriebswelle (43) und eine Umlenkachse (44) jeweils mit Umlenkrollen (45) für die Einzelgurte (24, 25),
d) Antriebswelle (43) und Umlenkachse (44) sind durch Tragorgane zu einer konstruktiven Einheit verbunden, insbesondere durch Verbindungsstege (46).

6. Vorrichtung nach Anspruch 5, **dadurch gekennzeichnet, dass** zur Verstellung der Gurtförderer (22, 23) bzw. mindestens eines Gurtförderers die Antriebswelle (43) verstellbar ist, vorzugsweise durch ein Stellgetriebe (62), welches eine Querverschiebung der Gurtförderer (22, 23) bewirkt, insbesondere einer Halterung für jeweils ein Ende der Antriebswellen (43).

7. Vorrichtung nach Anspruch 6 oder einem der weiteren vorhergehenden Ansprüche, **dadurch gekennzeichnet, dass** die Gurtförderer (22, 23), insbesondere die Antriebswellen (43) derselben, in zugeordneten Gurtträgern (51, 52) gelagert sind, vorzugsweise in der Ausführung als U-förmiges Tragorgan mit einem Tragstück (53), einem quergerichteten Tragarm (54) und einem aufrechten Tragschenkel (55), wobei die Gurtträger (51, 52) an einem Traggestell - Tragplatte (58) - verschiebbar gelagert sind, insbesondere aufgrund Verschiebbarkeit der Tragstücke (53) mithilfe des Stellgetriebes (62).

8. Vorrichtung nach Anspruch 1 oder einem der weiteren vorhergehenden Ansprüche, **gekennzeichnet durch** folgende Merkmale:
a) die Packungen (10) werden aufeinanderfolgend im Bereich einer Aufnahmestation (20) in bereitgehaltene, einander gegenüberliegende Halterungen (26) vorzugsweise in Horizontalrichtung eingeschoben, derart, dass mehrere, vorzugsweise fünf Packungen (10) unter Bildung einer Packungsreihe (27, 28) in zusammenwirkenden Halterungen (26) Aufnahme finden,
b) die Gurtförderer (22, 23) sind aus der Aufnahmestation (20) durch taktweise Bewegung in den Bereich einer Abgabestation (21) transportierbar,
c) in der Abgabestation (21) sind zwei übereinander angeordnete Paare von Halterungen (26) gemeinsam entleerbar durch Abschieben der Packungen (10) bzw. Packungsreihen (27, 28) durch einen gemeinsamen Schieber aus den Halterungen (26) ausschiebbar und auf einem Abförderer (29) ablegbar, insbesondere in der Formation mit zwei zueinander ausgerichteten Packungsreihen (27, 28) übereinander.

9. Vorrichtung nach Anspruch 8, **dadurch gekennzeichnet, dass** die Packungen (10) im Bereich der Abgabestation (21) durch den Abförderer (29) aus den Halterungen (26) - in Längsrichtung derselben - ausschiebbar sind, wobei der Abförderer (29) Mitnehmer (30) aufweist, die aufgrund entsprechender Abmessung vorzugsweise zwei übereinander angeordnete Einheiten von Halterungen (26) gleichzeitig entleeren unter Bildung von zwei übereinanderliegenden Packungsreihen (27, 28).

10. Vorrichtung nach Anspruch 1 oder einem der weiteren vorhergehenden Ansprüche, **dadurch gekennzeichnet, dass** die Gurtförderer (22, 23) - einzeln oder gemeinsam - schwenkbar sind, insbesondere um die obere Antriebswelle (43), derart, dass mindestens ein Gurtförderer (22, 23) in eine schräggerichtete Stellung - relativ zum anderen Gurtförderer - bewegbar ist zur Entleerung des Packungsförderers (19).

11. Vorrichtung nach einem der Ansprüche 5-10, **dadurch gekennzeichnet, dass** die Antriebswellen (43) durch gemeinsamen Antrieb drehbar sind, insbesondere durch einen gemeinsamen Zahnriemen (49), der mit Zahnrädern (48) an jeweils einem Ende der Antriebswellen (43) in Eingriff steht und vorzugsweise durch einen Servomotor (50) antreibbar ist, wobei Endbereiche der Antriebswellen (43) durch Ausnehmungen in der Tragplatte (58), insbesondere durch Langlöcher (59), hindurchgeführt und die Zahnräder (48) auf der freien Seite in Bezug auf die Tragplatte (58) angeordnet sind.

12. Vorrichtung nach einem der Ansprüche 7-11, **dadurch gekennzeichnet, dass** die Gurtträger (51, 52) als einseitig auskragende Tragorgane ausgebildet und vorzugsweise verschiebbar an der Tragplatte (58) gelagert sind, wobei ein freies Ende der Antriebswellen (43) in einem an den Gurtträgern (51, 52) angebrachten Lager (56) gehalten ist.

13. Vorrichtung nach Anspruch 1 oder einem der weiteren vorhergehenden Ansprüche, **dadurch gekennzeichnet, dass** den Packungen (10) im Bereich der Halterungen (26) der Gurtförderer (22, 23) ein verstellbarer Anschlag (47) zugeordnet ist, insbesondere in der Ausführung als aufrechter Steg im Bereich zwischen den benachbarten Halterungen (26), derart, dass die Packungen (10) mit in Bewegungsrichtung vorn liegenden Seitenflächen (15) in der Endstellung im Packungsförderer (19) Anlage erhalten an dem Anschlag (47).

14. Vorrichtung nach Anspruch 1 oder einem der weiteren vorhergehenden Ansprüche, **dadurch gekennzeichnet, dass** zwischen den zusammenwirkenden Gurtförderern (22, 23) bzw. zwischen deren Halterungen (26) eine Höhenführung (37) für die Packungen (10) im Bereich der Aufnahmestation (20) und im Bereich nachfolgender Stationen der Gurtförderer (22, 23) angeordnet ist, insbesondere eine der Höhe nach verstellbare Platte.

## Claims

1. Apparatus for transporting cuboidal packs (10) with the aid of belt conveyors (22, 23) which are arranged in an upright position and have conveying strands directed towards one another, wherein the belt conveyors (22, 23) have mutually opposite holders (26) for gripping in each case one or more packs (10) such that at least two of the interacting holders (26) grip one or more packs (10) for transporting purposes, wherein the holders (26) have limbs for gripping the packs (10) at opposite regions, namely a lower, horizontally directed carrying limb (39) for bearing the packs (10) and at least one abutment or retaining limb (41), which acts on the opposite, upper side of the packs (10) and, on account of shaping, relative position and/or movement capability, can be adapted to different dimensions of the packs (10), in particular to different heights of the same, wherein at least certain subregions of the retaining limb (41) of the holder (26), the retaining limb acting on the upper side of the packs (10), are arranged at an angle in relation to the horizontally directed carrying limb (39), namely in a sloping position or with a curved contour, such that in correspondingly different relative positions, on account of different dimensions, the packs (10) butt against corresponding regions of the sloping or curved retaining limb (41), preferably by way of a transversely directed pack edge (42) directed towards the retaining limbs (41), **characterized in that** at least one of the holders (26) assigned to a pack (10) is designed in the form of a shaped, elongate, cross-sectionally approximately C-shaped profile which is open at both ends and has the horizontal carrying limb (39), an adjoining, upright connecting limb (40) and the retaining limb (41), which adjoins the connecting limb.

2. Apparatus according to Claim 1, **characterized in that** cuboidal packs (10), with a front surface (13), rear surface (14), side surfaces (15), end surface (16) and base surface (17), are received in the region of the interacting, adjacent holders (26) such that the elongate side surfaces (15) are oriented transversely in relation to the holders (26) and the packs (10) are received in the holders (26) by way of a region which is directed towards the end surface (16), on the one hand, and the base surface (17), on the other hand, wherein preferably an (upper) pack edge (42) formed between a large-surface-area pack side, on the one hand, and the end surface (16) or the base surface (17), on the other hand, butts against the retaining limb (41) of the holder (26).

3. Apparatus according to Claim 1 or 2, **characterized in that** the at least one profile is designed for receiving a plurality of - preferably five - adjacent packs (10) for the purpose of forming a pack row (27, 28) for a cigarette multipack comprising preferably five or ten packs (10).

4. Apparatus according to Claim 1 or one of the other preceding claims, **characterized in that** the belt conveyors (22, 23) can be adjusted in terms of distance from one another, in particular such that the upright belt conveyors (22, 23) can be displaced parallel in terms of distance from one another for the purpose of adaptation to different dimensions of the packs (10) which are to be transported.

5. Apparatus according to Claim 1 or one of the other preceding claims, **characterized by** the following features:
a) preferably both belt conveyors (22, 23) comprise a plurality of, in particular two, individual belts (24, 25) running at a distance from one another,
b) the individual belts (24, 25) are connected to one another by the profiles forming the holders (26),
c) the belt conveyors (22, 23) have upper and lower deflecting spindles for the individual belts (24, 25), in particular a drive shaft (43) and a deflecting spindle (44), each with deflecting rollers (45) for the individual belts (24, 25),
d) the drive shaft (43) and deflecting spindle (44) are connected by carrying members, in particular by connecting crosspieces (46), to form a structural unit.

6. Apparatus according to Claim 5, **characterized in that**, for the purpose of adjusting the belt conveyors (22, 23) or at least one belt conveyor, the drive shaft (43) can be adjusted, preferably by an adjustment mechanism (62), which gives rise to transverse displacement of the belt conveyors (22, 23), in particular of a holder for a respective end of the drive shafts (43).

7. Apparatus according to Claim 6 or one of the other preceding claims, **characterized in that** the belt conveyors (22, 23), in particular the drive shafts (43) of the same, are mounted in associated belt carriers (51, 52), preferably designed in the form of a U-shaped carrying member comprising a carrying piece (53), a transversely directed carrying arm (54) and an upright carrying limb (55), wherein the belt carriers (51, 52) are mounted in a displaceable manner on a carrying framework, carrying plate (58), in particular on account of displacement capability of the carrying pieces (53) with the aid of the adjustment mechanism (62).

8. Apparatus according to Claim 1 or one of the other preceding claims, **characterized by** the following features:
a) the packs (10) are pushed preferably in a horizontal direction one after the other, in the region of a receiving station (20), into at-the-ready, mutually opposite holders (26) such that a plurality of, in particular five, packs (10) are received in interacting holders (26), a pack row (27, 28) being formed in the process,
b) the belt conveyors (22, 23) can be transported by cyclical movement out of the receiving station (20) into the region of a discharging station (21),
c) in the discharging station (21), two pairs of holders (26), arranged one above the other, can be emptied together by virtue of the packs (10) or pack rows (27, 28) being pushed, by a common pusher, out of the holders (26) and set down on a discharging conveyor (29), in particular in the formation with two aligned pack rows (27, 28) one above the other.

9. Apparatus according to Claim 8, **characterized in that**, in the region of the discharging station (21), the discharging conveyor (29) can push the packs (10) out of the holders (26), in the longitudinal direction of the same, wherein the removal conveyors (29) have drivers (30) which, on account of corresponding dimensioning, simultaneously empty preferably two units of holders (26) arranged one above the other, two pack rows (27, 28) located one above the other being formed in the process.

10. Apparatus according to Claim 1 or one of the other preceding claims, **characterized in that** the belt conveyors (22, 23) can be pivoted - individually or together - in particular about the upper drive shaft (43) such that at least one belt conveyor (22, 23) can be moved into a sloping position - relative to the other belt conveyor - for the purpose of the pack conveyor (19) being emptied.

11. Apparatus according to one of Claims 5-10, **characterized in that** the drive shafts (43) can be rotated by a common drive, in particular by a common toothed belt (49), which engages with gearwheels (48) at a respective end of the drive shafts (43) and can preferably be driven by a servomotor (50), wherein end regions of the drive shafts (43) are guided through apertures in the carrying plate (58), in particular through slots (59), and the gearwheels (48) are arranged on the free side in relation to the carrying plate (58).

12. Apparatus according to one of Claims 7-11, **characterized in that** the belt carriers (51, 52) are designed in the form of carrying members which project on one side, and the belt carriers are mounted preferably in a displaceable manner on the carrying plate (58), wherein a free end of the drive shafts (43) is retained in a bearing (56) fitted on the belt carriers (51, 52).

13. Apparatus according to Claim 1 or one of the other preceding claims, **characterized in that**, in the region of the holders (26) of the belt conveyors (22, 23), the packs (10) are assigned an adjustable stop (47), in particular designed in the form of an upright crosspiece in the region between the adjacent holders (26), such that, in the end position in the pack conveyor (19), the packs (10) come into abutment against the stop (47) by way of leading side surfaces (15), as seen in the movement direction.

14. Apparatus according to Claim 1 or one of the other preceding claims, **characterized in that**, between the interacting belt conveyors (22, 23) or between the holders (26) thereof, a height guide (37) for the packs (10), in particular a height-adjustable plate, is arranged in the region of the receiving station (20) and in the region of subsequent stations of the belt conveyors (22, 23).

## Revendications

1. Dispositif pour le transport d'emballages parallélépipédiques (10) à l'aide de transporteurs à courroie (22, 23) qui sont agencés en position verticale et dont les brins de transport sont tournés l'un vers l'autre, les transporteurs à courroie (22, 23) présentant des supports (26) opposés l'un à l'autre pour saisir chacun un ou plusieurs emballages (10), de telle sorte qu'au moins deux des supports (26) coopérants saisissent un ou plusieurs emballages (10) pour le transport, les supports (26) présentant des branches pour saisir les emballages (10) dans des zones opposées, à savoir une branche porteuse (39) inférieure, orientée horizontalement, pour l'appui des emballages (10) et au moins un contre-support ou branche de retenue (41) agissant sur le côté supérieur opposé des emballages (10) qui, en raison de sa forme, de sa position relative et/ou de sa mobilité, peut être adaptée à différentes dimensions des emballages (10), notamment à différentes hauteurs de ceux-ci, la branche de retenue (41) du support (26) agissant sur le côté supérieur des emballages (10) étant agencée, au moins dans des zones partielles, selon un angle par rapport à la branche porteuse (39) orientée horizontalement, à savoir dans une position oblique ou avec un contour en forme d'arc, de telle sorte que les emballages (10), dans des positions relatives différentes en raison de dimensions différentes, s'appuient sur des zones correspondantes de la branche de retenue (41) orientée en oblique ou en forme d'arc, de préférence sur un bord d'emballage (42) orienté transversalement, tourné vers les branches de retenue (41), **caractérisé en ce qu'**au moins l'un des supports (26) associés à un emballage (10) est réalisé sous forme de profilé façonné, allongé, de section transversale approximativement en forme de C, ouvert aux deux extrémités, avec la branche porteuse horizontale (39), une branche de liaison verticale (40) s'y raccordant et la branche de retenue (41) se raccordant à celle-ci.

2. Dispositif selon la revendication 1, **caractérisé en ce que** des emballages parallélépipédiques (10) avec une surface avant (13), une surface arrière (14), des surfaces latérales (15), une surface frontale (16) et une surface de fond (17) sont reçus dans la zone des supports voisins (26) coopérants de telle sorte les surfaces latérales allongées (15) sont orientées transversalement par rapport aux supports (26) et les emballages (10) sont reçus dans les supports (26) avec une zone tournée vers la surface frontale (16) d'une part et la surface de fond (17) d'autre part, de préférence un bord d'emballage (42) (supérieur) formé entre un côté d'emballage à grande surface d'une part et la surface frontale (16) ou la surface de fond (17) d'autre part prenant appui sur la branche de retenue (41) du support (26).

3. Dispositif selon la revendication 1 ou 2, **caractérisé en ce que** l'au moins un profilé est configuré pour recevoir une pluralité d'emballages (10) - de préférence cinq - juxtaposés pour former une rangée d'emballages (27, 28) pour un emballage de paquets de cigarettes avec de préférence cinq ou dix emballages (10) .

4. Dispositif selon la revendication 1 ou l'une quelconque des autres revendications précédentes, **caractérisé en ce que** les transporteurs à courroie (22, 23) sont réglables en ce qui concerne la distance entre eux, notamment de telle sorte que les transporteurs à courroie (22, 23) verticaux peuvent être coulissés parallèlement en ce qui concerne la distance entre eux pour s'adapter à différentes dimensions des emballages (10) à transporter.

5. Dispositif selon la revendication 1 ou l'une quelconque des autres revendications précédentes, **caractérisé par** les caractéristiques suivantes :
a) de préférence, les deux transporteurs à courroie (22, 23) sont constitués de plusieurs, notamment de deux courroies individuelles (24, 25) se déplaçant à distance l'une de l'autre,
b) les courroies individuelles (24, 25) sont reliées entre elles par les profilés formant les supports (26),
c) les transporteurs à courroie (22, 23) présentent des axes de renvoi supérieur et inférieur pour les courroies individuelles (24, 25), notamment un arbre d'entraînement (43) et un axe de renvoi (44), chacun avec des galets de renvoi (45) pour les courroies individuelles (24, 25),
d) l'arbre d'entraînement (43) et l'axe de renvoi (44) sont reliés par des organes porteurs en une unité de construction, notamment par des entretoises de liaison (46) .

6. Dispositif selon la revendication 5, **caractérisé en ce que,** pour le réglage des transporteurs à courroie (22, 23) ou d'au moins un transporteur à courroie, l'arbre d'entraînement (43) est réglable, de préférence par un mécanisme de réglage (62), qui provoque un coulissement transversal des transporteurs à courroie (22, 23), notamment d'un support pour respectivement une extrémité des arbres d'entraînement (43).

7. Dispositif selon la revendication 6 ou l'une quelconque des autres revendications précédentes, **caractérisé en ce que** les transporteurs à courroie (22, 23), notamment les arbres d'entraînement (43) de ceux-ci, sont montés dans des supports de courroie (51, 52) associés, de préférence sous la forme d'un organe porteur en forme de U avec une pièce porteuse (53), un bras porteur orienté transversalement (54) et une branche porteuse verticale (55), les supports de courroie (51, 52) étant montés de manière coulissante sur un châssis porteur - plaque porteuse (58) -, notamment en raison de la possibilité de coulissement des pièces porteuses (53) à l'aide du mécanisme de réglage (62).

8. Dispositif selon la revendication 1 ou l'une quelconque des autres revendications précédentes, **caractérisé par** les caractéristiques suivantes :
a) les emballages (10) sont insérés successivement dans la zone d'un poste de réception (20) dans des supports (26) maintenus prêts, opposés les uns aux autres, de préférence dans la direction horizontale, de telle sorte que plusieurs, de préférence cinq, emballages (10) sont reçus dans des supports (26) coopérants en formant une rangée d'emballages (27, 28),
b) les transporteurs à courroie (22, 23) peuvent être transportés depuis le poste de réception (20) par un mouvement cadencé dans la zone d'un poste de distribution (21),
c) dans le poste de distribution (21), deux paires de supports (26) agencées l'une au-dessus de l'autre peuvent être vidées ensemble par poussée des emballages (10) ou des rangées d'emballages (27, 28), peuvent être extraites des supports (26) par un poussoir commun et déposées sur un évacuateur (29), notamment en formation avec deux rangées d'emballages (27, 28) alignées l'une sur l'autre.

9. Dispositif selon la revendication 8, **caractérisé en ce que** les emballages (10) peuvent être extraits des supports (26) - dans la direction longitudinale de ceux-ci - dans la zone du poste de distribution (21) par l'évacuateur (29), l'évacuateur (29) présentant des entraîneurs (30) qui, en raison de dimensions correspondantes, vident simultanément de préférence deux unités de supports (26) agencées l'une au-dessus de l'autre en formant deux rangées d'emballages (27, 28) superposées.

10. Dispositif selon la revendication 1 ou l'une quelconque des autres revendications précédentes, **caractérisé en ce que** les transporteurs à courroie (22, 23) - individuellement ou ensemble - peuvent pivoter, notamment autour de l'arbre d'entraînement supérieur (43), de telle sorte qu'au moins un transporteur à courroie (22, 23) peut être déplacé dans une position orientée en oblique - par rapport à l'autre transporteur à courroie - pour vider le transporteur d'emballage (19).

11. Dispositif selon l'une quelconque des revendications 5 à 10, **caractérisé en ce que** les arbres d'entraînement (43) sont rotatifs par un entraînement commun, notamment par une courroie dentée commune (49), qui est en prise avec des roues dentées (48) à une extrémité respective des arbres d'entraînement (43) et qui peut être entraînée de préférence par un servomoteur (50), des zones d'extrémité des arbres d'entraînement (43) passant à travers des évidements dans la plaque porteuse (58), notamment à travers des trous oblongs (59), et les roues dentées (48) étant agencées sur le côté libre par rapport à la plaque porteuse (58).

12. Dispositif selon l'une quelconque des revendications 7 à 11, **caractérisé en ce que** les supports de courroie (51, 52) sont réalisés sous forme d'organes porteurs en saillie d'un côté et sont montés de préférence de manière coulissante sur la plaque porteuse (58), une extrémité libre des arbres d'entraînement (43) étant maintenue dans un palier (56) disposé sur les supports de courroie (51, 52).

13. Dispositif selon la revendication 1 ou l'une quelconque des autres revendications précédentes, **caractérisé en ce qu'**une butée réglable (47) est associée aux emballages (10) dans la zone des supports (26) des transporteurs à courroie (22, 23), notamment sous la forme d'une entretoise verticale dans la zone entre les supports (26) voisins, de telle sorte que les emballages (10) prennent appui avec des surfaces latérales (15) situées à l'avant dans la direction de déplacement contre la butée (47) dans la position finale dans le transporteur d'emballages (19).

14. Dispositif selon la revendication 1 ou l'une quelconque des autres revendications précédentes, **caractérisé en ce qu'**un guide de hauteur (37) pour les emballages (10) est agencé entre les transporteurs à courroie (22, 23) coopérants ou entre leurs supports (26) dans la zone du poste de réception (20) et dans la zone de postes suivants des transporteurs à courroie (22, 23), notamment une plaque réglable en hauteur.
